# EUROPEAN PATENT APPLICATION

(11) **EP 4 850 947 A1**
(43) Date of publication of application: **09.12.2026**
(21) Application number: 25220514.1
(22) Date of filing: 03.12.2025
(51) Int. Cl.: B60K 1/04

(54) **VEHICLE BODY-BATTERY ASSEMBLY**

(30) Priority: 05.06.2025 KR 20250074122
(71) Applicant: Hyundai Motor Company, Seoul 06797 (KR); Kia Corporation, Seoul 06797 (KR)
(72) Inventor: SHIN, Gyung Hoon, 18280 Hwaseong-si, Gyeonggido (KR); KIM, Chan Sol, 18280 Hwaseong-si, Gyeonggido (KR); KIM, Kyung Mo, 18280 Hwaseong-si, Gyeonggido (KR)
(74) Representative: Viering, Jentschura & Partner mbB Patent- und Rechtsanwälte

(57) **Abstract**

Disclosed is a vehicle body-battery assembly. The vehicle body-battery assembly includes a chassis frame, a battery housing including a base cover that is coupled to the chassis frame to cover a side of an occupant space, and a battery module that is detachably supported by the base cover on a first side opposite to a second side, on which the occupant space is provided, with respect to the base cover.

## Description

### CROSS-REFERENCE TO RELATED APPLICATION

This application claims the benefit of and priority to Korean Patent Application No. 10-2025-0074122, filed June 5, 2025, in the Korean Intellectual Property Office, the entire contents of which are incorporated herein by reference.

### BACKGROUND

### (a) Technical Field

The present disclosure relates to a vehicle body-battery assembly.

### (b) Background

Recently, as awareness of environmental crises and petroleum resource depletion has increased, research and development into technologies involving electric vehicles that are eco-friendly vehicles have emerged.

An electric vehicle is a vehicle that is configured to move using electric power, and may comprise a vehicle body, a battery housing that is provided in the vehicle body, and a battery module that is accommodated in the battery housing. Recently, to increase energy density and reduce the weight of electric vehicles, research on a structure, in which the battery housing and the vehicle body are integrated, has been conducted.

Meanwhile, a plurality of battery modules may be provided in electric vehicles. When any one of the plurality of battery modules is abnormal, all of the plurality of battery modules provided in the electric vehicle may be replaced. In such a case, because battery modules other than the abnormal battery module also have to be replaced together, the replacement costs of the electric vehicle may be high and, thus, there is an increasing need for a structure that may reduce the replacement costs of the electric vehicle.

### SUMMARY

The present disclosure has been made to solve the above-mentioned problems occurring in the prior art while advantages achieved by the prior art are maintained intact.

An aspect of the present disclosure provides a vehicle body-battery assembly, in which a battery housing and a vehicle body are integrated, so that each of a plurality of battery modules may be replaced.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a vehicle body-battery assembly includes a chassis frame, a battery housing including a base cover that is coupled to the chassis frame to cover a side of an occupant space, and a battery module that is detachably supported by the base cover on a first side opposite to a second side, on which the occupant space is provided, with respect to the base cover.

The battery module may be extractable from the base cover in a widthwise direction of the base cover on the first side of the base cover.

The battery module may be configured such that the widthwise direction of the base cover is a lengthwise direction of the battery module, and may be inserted toward the base cover in the widthwise direction of the base cover.

The base cover may define a base cooling channel in an interior of the base cover.

The base cover may include a base cover body that defines the base cooling channel, a seat protrusion body that is supported by the base cover body, and protrudes from a side of the base cover body toward the occupant space, and a cross support body that is disposed on the opposite side of the base cover body.

A plurality of cross support bodies may be provided to be spaced apart from each other along a lengthwise direction of the base cover to support the battery module between the plurality of cross support bodies, and each of the plurality of cross support bodies may support the battery module provided between the plurality of cross support bodies.

The cross support body may include a module stopping groove having a shape opened toward a first side of the cross support body, which faces the battery module.

The battery modules may include a plurality of battery cells, a module housing body that accommodates the plurality of battery cells, and a module protrusion body that protrudes from the module housing body toward the module stopping groove and is inserted into the module stopping groove.

The base cooling channel may include a part that extends along a widthwise direction of the base cover.

The base cooling channel may be arranged in a serpentine shape along a lengthwise direction of the base cover, and the battery housing may further include a side member that is coupled to a side of the base cover, and in which a side cooling channel communicating with the base cooling channel is formed in an interior of the side member.

The side member may be inserted into the base cover in the widthwise direction of the base cover.

The side member may include an upper side member that is inserted into the base cover and including the side cooling channel, and a lower side member, on which the upper side member is seated, and that covers the battery module.

The side cooling channel may include a first side cooling channel that is provided on a first side of the base cooling channel and a second side cooling channel that is provided on a second side of the base cooling channel, and the side member may include a first side member that is connected to a first side of the base cover in the width direction of the base cover, and defines a recovery communication hole that communicates the first side cooling channel and the base cooling channel, and a second side member that is connected to a second side of the base cover in the width direction of the base cover, and defines a supply communication hole that communicates the second side cooling channel and the base cooling channel.

The vehicle body-battery assembly may further include a supply part that communicates with the second side cooling channel, and is configured to supply cooling water to the second side cooling channel, and a recovery part that communicates with the first side cooling channel to recover the cooling water supplied through the supply part, flows through the second side cooling channel and the base cooling channel, and is introduced into the first side cooling channel.

The vehicle body-battery assembly may further include a heat transfer material that is provided between the base cover and the battery module.

The base cover may include a base cover body including a heat transfer injection hole that passes through the base cover to communicate the second side of the base cover and a space between the base cover and the battery module.

The vehicle body-battery assembly may further include an injection hole cover member that is disposed on the second side of the base cover, and covers the heat transfer injection hole.

The base cooling channel may be partitioned along a lengthwise direction of the base cover, and the base cover body may include a heat transfer injection wall, in which the heat transfer injection hole is formed, and a channel partition wall, a thickness of which is smaller than a thickness of the heat transfer injection wall, and that partitions the base cooling channel.

The base cover may include a plurality of sub-base covers that are separably coupled to each other.

The base cover may be formed of an extrudable material.

According to an aspect of the present disclosure, a vehicle body-battery assembly is provided. The vehicle body-battery assembly may comprise a chassis frame, a battery housing comprising a base cover coupled to the chassis frame, and a battery module detachably supported by the base cover.

According to an exemplary embodiment, the base cover may be positioned to cover a side of an occupant space.

According to an exemplary embodiment, the battery module may be detachably supported by the base cover on a first side opposite to a second side, on which the occupant space is provided, with respect to the base cover.

According to an exemplary embodiment, the battery module may be configured to be extractable from the base cover in a widthwise direction of the base cover on the first side of the base cover.

According to an exemplary embodiment, the battery module may be configured such that the widthwise direction of the base cover is a lengthwise direction of the battery module, and it is configured to be inserted toward the base cover in the widthwise direction of the base cover.

According to an exemplary embodiment, the base cover defines a base cooling channel in an interior of the base cover.

According to an exemplary embodiment, the base cover may comprise a base cover body defining the base cooling channel, a seat protrusion body supported by the base cover body and protruding from a side of base cover body toward the occupant space, and a cross support body disposed on the opposite side of the base cover body.

According to an exemplary embodiment, the vehicle body-battery assembly may comprise a plurality of cross support bodies spaced apart from each other along a lengthwise direction of the base cover to support the battery module between the plurality of cross support bodies. Each of the plurality of cross support bodies may be configured to support the battery module provided between the plurality of cross support bodies.

According to an exemplary embodiment, the cross support body may comprise a module stopping groove having a shape opened toward a first side of the cross support body, which faces the battery module, and the battery modules may comprise plurality of battery cells, a module housing body configured to accommodate the plurality of battery cells, and a module protrusion body protruding from the module housing body toward the module stopping groove and configured to be inserted into the module stopping groove.

According to an exemplary embodiment, the base cooling channel may comprise a part extending along a widthwise direction of the base cover.

According to an exemplary embodiment, the base cooling channel may be arranged in a serpentine shape along a lengthwise direction of the base cover, and the battery housing may comprise a side member coupled to a side of the base cover and in which a side cooling channel communicating with the base cooling channel is formed in an interior of the side member.

According to an exemplary embodiment, the side member may be configured to be inserted into the base cover in the widthwise direction of the base cover, and the side member may comprise an upper side member inserted into the base cover and comprising the side cooling channel and a lower side member on which the upper side member is seated, and configured to cover the battery module.

According to an exemplary embodiment, the side cooling channel may comprise a first side cooling channel provided on a first side of the base cooling channel and a second side cooling channel provided on a second side of the base cooling channel, and the side member may comprise a first side member connected to a first side of the base cover in the width direction of the base cover, and defining a recovery communication hole configured to communicate the first side cooling channel and the base cooling channel; and a second side member connected to a second side of the base cover in the width direction of the base cover, and defining a supply communication hole configured to communicate the second side cooling channel and the base cooling channel.

According to an exemplary embodiment, the vehicle body-battery assembly may comprise a supply part configured to communicate with the second side cooling channel, and configured to supply cooling water to the second side cooling channel, and a recovery part configured to communicate with the first side cooling channel to recover the cooling water supplied through the supply part, flowing through the second side cooling channel and the base cooling channel, and introduced into the first side cooling channel.

According to an exemplary embodiment, the vehicle body-battery assembly may comprise a heat transfer material provided between the base cover and the battery module.

According to an exemplary embodiment, the base cover may comprise a base cover body comprising a heat transfer injection hole configured to pass through the base cover to communicate the second side of the base cover and a space between the base cover and the battery module.

According to an exemplary embodiment, the vehicle body-battery assembly may comprise an injection hole cover member disposed on the second side of the base cover and configured to cover the heat transfer injection hole.

According to an exemplary embodiment, the base cooling channel may be partitioned along a lengthwise direction of the base cover, and the base cover body may comprise a heat transfer injection wall, in which the heat transfer injection hole is formed and a channel partition wall, a thickness of which is smaller than a thickness of the heat transfer injection wall, and configured to partition the base cooling channel.

According to an exemplary embodiment, the base cover may comprise a plurality of sub-base covers separably coupled to each other.

According to an exemplary embodiment, the base cover may comprise an extrudable material.

According to an aspect of the present disclosure, a vehicle body-battery assembly is provided. The vehicle body-battery assembly may comprise a chassis frame, a battery housing comprising a base cover coupled to the chassis frame, and a battery module detachably supported by the base cover on a first side opposite to a second side with respect to the base cover.

### BRIEF DESCRIPTION OF THE DRAWINGS

The foregoing and other aspects, features, and advantages, as well as the following detailed description of the embodiments, will be better understood when read in conjunction with the accompanying drawings. However, the present disclosure is not intended to be limited to the details shown in the drawings, and various modifications and structural changes may be made therein without departing from the spirit of the present disclosure and within the scope and range of equivalents of the claims. Like reference numbers and designations in the various drawings indicate like elements.
FIG. 1 illustrates a perspective view of a vehicle body-battery assembly, according to an exemplary embodiment of the present disclosure.
FIG. 2 illustrates an exploded perspective view of the vehicle body-battery assembly, according to an exemplary embodiment of the present disclosure.
FIG. 3 illustrates a perspective view of a base cover, a first upper side member, a second upper side member, and a plurality of battery modules inserted into the base cover, according to an exemplary embodiment of the present disclosure.
FIG. 4 illustrates a bottom perspective view of the vehicle body-battery assembly, according to an exemplary embodiment of the present disclosure.
FIG. 5 illustrates an enlarged view of the vehicle body-battery assembly illustrated in FIG. 4, according to an exemplary embodiment of the present disclosure.
FIG. 6 illustrates a side view of a battery module and the base cover of the vehicle body-battery assembly, according to an exemplary embodiment of the present disclosure.
FIG. 7 illustrates an enlarged view of the battery module and the base cover illustrated in FIG. 6, according to an exemplary embodiment of the present disclosure.
FIG. 8 illustrates an exploded perspective view of a pack housing, according to an exemplary embodiment of the present disclosure.
FIG. 9 illustrates a perspective view of the base cover, according to an exemplary embodiment of the present disclosure.
FIG. 10 illustrates an enlarged side view of the base cover illustrated in FIG. 9, according to an exemplary embodiment of the present disclosure.
FIG. 11 illustrates an exploded perspective view of the base cover illustrated in FIG. 9, according to an exemplary embodiment of the present disclosure.
FIG. 12 illustrates a plan view of the base cover and a side member, according to an exemplary embodiment of the present disclosure.
FIG. 13 illustrates an enlarged perspective view of portion A illustrated in FIG. 12, according to an exemplary embodiment of the present disclosure.
FIG. 14 illustrates an enlarged perspective view of portion B illustrated in FIG. 12, according to an exemplary embodiment of the present disclosure.
FIG. 15 illustrates a horizontal cross-sectional view of the base cover and the side member, according to an exemplary embodiment of the present disclosure.
FIG. 16 illustrates a longitudinal cross-sectional view of a first side member, the base cover, the battery module, and the housing cover, according to an exemplary embodiment of the present disclosure.
FIG. 17 illustrates a plan view of the vehicle body-battery assembly, according to an exemplary embodiment of the present disclosure.
FIG. 18 illustrates an enlarged view of the vehicle body-battery assembly illustrated in FIG. 17, according to an exemplary embodiment of the present disclosure.
FIG. 19 illustrates an enlarged view of the vehicle body-battery assembly illustrated in FIG. 17 with an injection hole cover member removed, according to an exemplary embodiment of the present disclosure.
FIG. 20 illustrates an enlarged view of a longitudinal cross section of the vehicle body-battery assembly illustrated in FIG. 17, according to an exemplary embodiment of the present disclosure.
FIG. 21 illustrates an enlarged side view of a battery module and a base cover of a vehicle body-battery assembly, according to an exemplary embodiment of the present disclosure.

### DETAILED DESCRIPTION

Hereinafter, exemplary embodiments of the present disclosure will be described in detail with reference to the accompanying drawings. In the drawings, the same reference numerals will be used throughout to designate the same or equivalent components. In describing the embodiments of the present disclosure, detailed descriptions associated with well-known functions or configurations will be omitted when they may make subject matters of the present disclosure unnecessarily obscure.

In describing components of embodiments of the present disclosure, the terms first, second, A, B, (a), (b), and the like may be used herein. These terms are only used to distinguish one component from another component, but do not limit the corresponding components irrespective of the nature, order, or priority of the corresponding components. Furthermore, unless otherwise defined, all terms including technical and scientific terms used herein are to be interpreted as is customary in the art to which the present disclosure belongs. Such terms as those defined in a generally used dictionary are to be interpreted as having meanings equal to the contextual meanings in the relevant field of art, and are not to be interpreted as having ideal or excessively formal meanings unless clearly defined as having such in the present application.

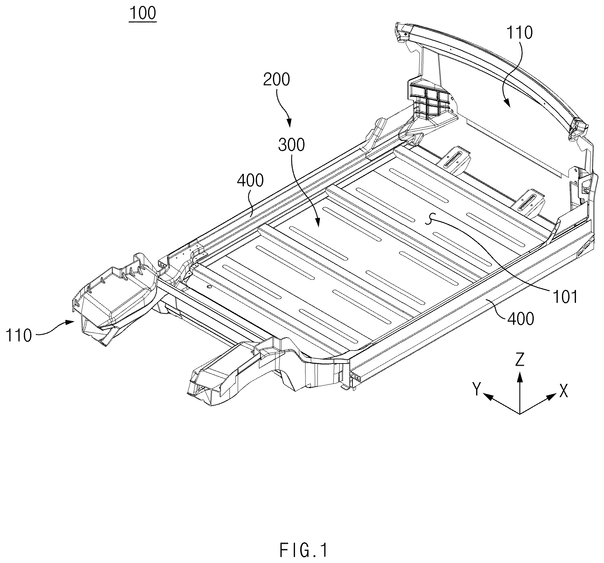

Hereinafter, embodiments of the present disclosure will be described in detail with reference to FIGS. 1 to 21. In the following description, the X direction may be a forward direction, a direction that is opposite to the X direction may be a rearward direction, the Y direction may be a leftward direction, a direction that is opposite to the Y direction may be a rightward direction, the Z direction may be an upward direction, and a direction that is opposite to the Z direction may be a downward direction.

The X direction or the direction that is opposite thereto may be a lengthwise direction of the base cover, and the Y direction or the direction that is opposite thereto may be a widthwise direction of the base cover.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the other part are indirectly electrically connected to each other.

In addition, the term "unit," "control unit," "control device," or "controller" is merely a widely used term for naming an element or component that controls a specific function, and does not mean a generic functional unit. For example, each controller may include a communication device that communicates with another controller or a sensor to control a function assigned thereto, a computer-readable recording medium that stores an operating system (OS), logic commands, input/output information, and the like, and at least one processor that performs determination, calculation, computation, decision, and the like that are necessary for controlling a function assigned thereto.

Meanwhile, the processor may include a semiconductor integrated circuit and/or electronic devices that perform at least one or more of comparison, determination, computation, and decision to achieve programmed functions. The processor may be, for example, any one or a combination of a computer, a microprocessor, a central processing unit (CPU), an application-specific integrated circuit (ASIC), an electronic circuitry, and a logic circuitry.

In addition, the computer-readable recording medium (or simply a "memory") may include all types of storage devices that store data readable by a computer system. The storage devices may include at least one type of, for example, flash memory, hard disk, micro-type memory, card-type (e.g., secure digital (SD) card or extreme digital (XD) card) memory, random-access memory (RAM), static RAM (SRAM), read-only memory (ROM), programmable ROM (PROM), electrically erasable PROM (EEPROM), magnetic RAM (MRAM), magnetic disk, or optical disc.

This recording medium may be electrically connected to the processor, and the processor may load and record data from the recording medium. The recording medium and the processor may be integrated or may be physically separated.

It is understood that the terms "vehicle", "vehicular", and other similar terms as used herein are inclusive of motor vehicles in general, such as passenger automobiles including sport utility vehicles (SUVs), buses, trucks, various commercial vehicles, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum). As referred to herein, a hybrid vehicle is a vehicle that has two or more sources of power, for example, vehicles powered by both gasoline and electricity.

Hereinafter, various embodiments of the present disclosure will be described in detail with reference to the accompanying drawings.

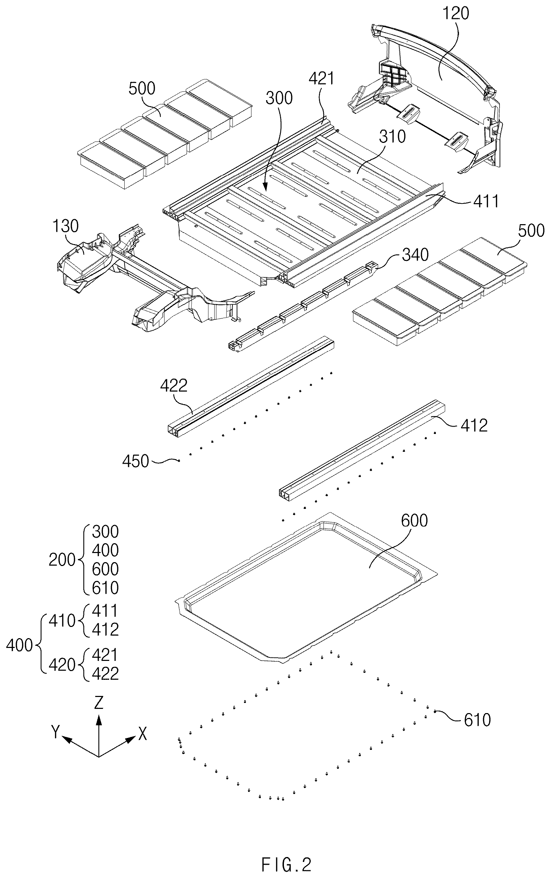

FIG. 1 illustrates a perspective view of a vehicle body-battery assembly, according to an exemplary embodiment of the present disclosure. FIG. 2 illustrates an exploded perspective view of the vehicle body-battery assembly, according to an exemplary embodiment of the present disclosure.

Referring to FIGS. 1 and 2, a vehicle body-battery assembly 100 may comprise a chassis frame 110, a battery housing 200 that defines an occupant space 101 together with the chassis frame 110, and a battery module 500 that is accommodated in an interior of the battery housing 200.

The battery housing 200 may be coupled to the chassis frame 110 to cover a lower side of the occupant space 101. The chassis frame 110 may comprise a front chassis frame 120 and a rear chassis frame 130.

The battery housing 200 may be disposed between the front chassis frame 120 and the rear chassis frame 130. The battery housing 200 may be coupled to the front chassis frame 120 and the rear chassis frame 130.

The battery housing 200 may comprise a base cover 300, a side member 400, a housing cover 600, and a cover coupling member 610 configured to couple the housing cover 600 to the base cover 300 and the side member 400.

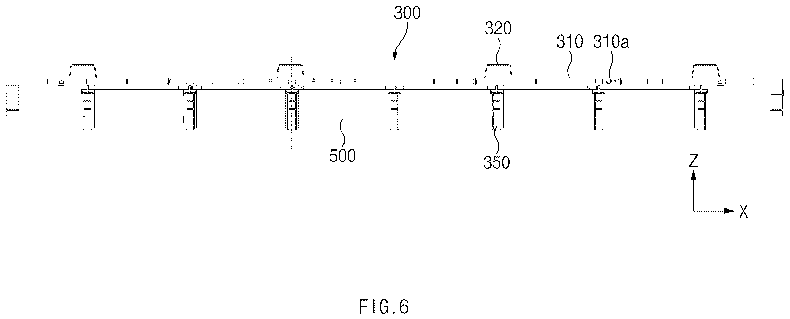

The base cover 300 may be provided on a lower side of the occupant space 101 and may be configured to cover the lower side of the occupant space 101. The base cover 300 may define a base cooling channel 310a (see FIG. 6) in an interior thereof. The base cover 300 may serve as a floor that is configured to support an occupant seated in the occupant space 101.

In the vehicle body-battery assembly 100, according to an exemplary embodiment of the present disclosure, the chassis frame 110 or the housing cover 600 may not serve as the floor of the occupant space 101, but the base cover 300 of the battery housing 200 may be configured to serve as the floor of the occupant space 101. Accordingly, compared to a structure, in which the housing cover 600 of the battery housing 200 serves as the floor, the robustness of the vehicle body-battery assembly 100 may be enhanced.

The battery module 500 may be provided between the base cover 300 and the housing cover 600.

The housing cover 600 may be configured to cover a lower side of the battery module 500. The housing cover 600 may be coupled to the base cover 300 and the side member 400 to cover the lower side of the battery module 500. The housing cover 600 may be coupled to the base cover 300 and the side member 400 by a plurality of cover coupling members 610 that are arranged along a circumferential direction of the housing cover 600.

The side members 400 may be disposed on opposite sides of the base cover 300 with respect to a widthwise direction thereof. The side members 400 may be coupled to the base cover 300. The side members 400 may define the occupant space 101 together with the base cover 300, the front chassis frame 120, and the rear chassis frame 130.

The side members 400 may comprise a first side member 410 that is disposed on one side of the base cover 300 in the widthwise direction and a second side member 420 that is disposed on an opposite side of the base cover 300 in the widthwise direction.

The first side member 410 may be disposed on a right side of the base cover 300, and the second side member 420 may be disposed on a left side of the base cover 300.

The first side member 410 may comprise a first upper side member 41 1 and a first lower side member 412. The second side member 420 may comprise a second upper side member 421 and a second lower side member 422.

The first upper side member 411 may be seated on the first lower side member 412. The first upper side member 411 and the first lower side member 412 may be coupled to each other by a side coupling member 450.

The second upper side member 421 may be seated on the second lower side member 422. The second upper side member 421 and the second lower side member 422 may also be coupled to each other by the side coupling member 450.

The battery module 500, according to an exemplary embodiment of the present disclosure, may be detachably supported by the base cover 300 on an opposite side to the one side, on which the occupant space 101 is formed, with respect to the base cover 300.

More specifically, the plurality of battery modules 500 may be supported by the base cover 300 between the base cover 300 and the housing cover 600, but each of the battery modules 500 may be extracted from the base cover 300 in the widthwise direction of the base cover 300 from a lower side of the base cover 300.

In other words, when one of the battery modules 500 is abnormal, the housing cover 600 of the vehicle body-battery assembly 100 may be configured to be separated from the base cover 300 and the side member 400, and the abnormal battery module 500 may then be separated from the base cover 300.

Hereinafter, the structure and process of separating the battery module 500 from the base cover 300 will be described in detail.

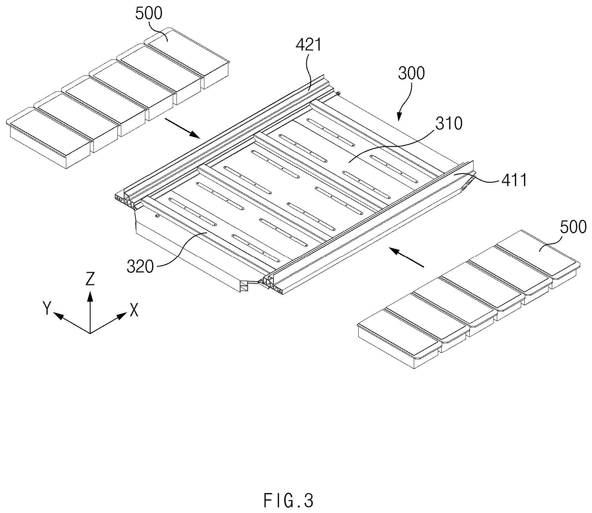

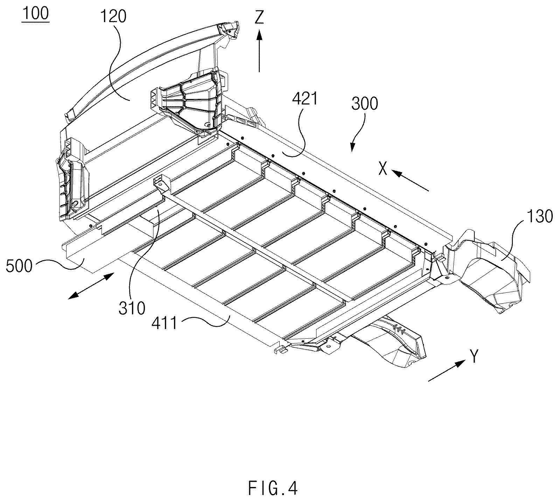

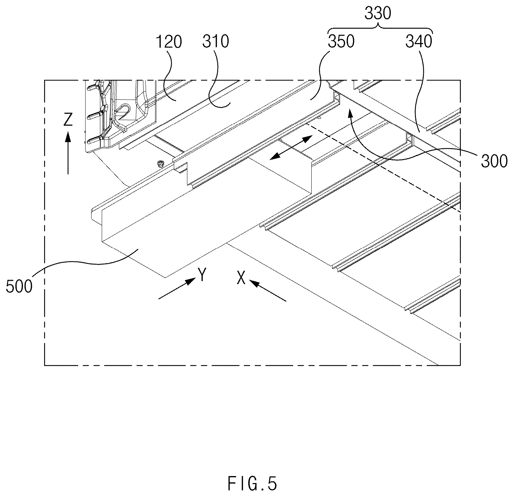

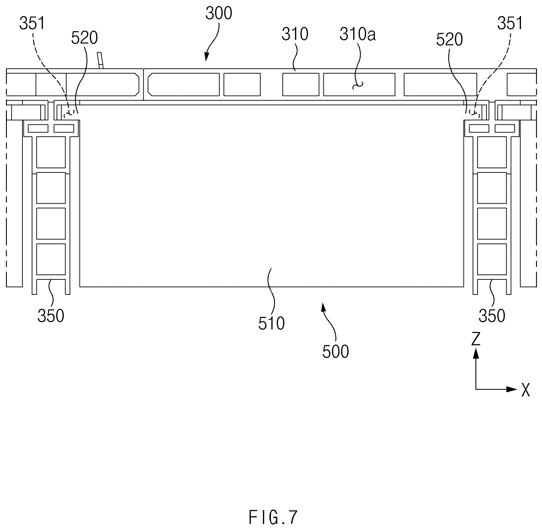

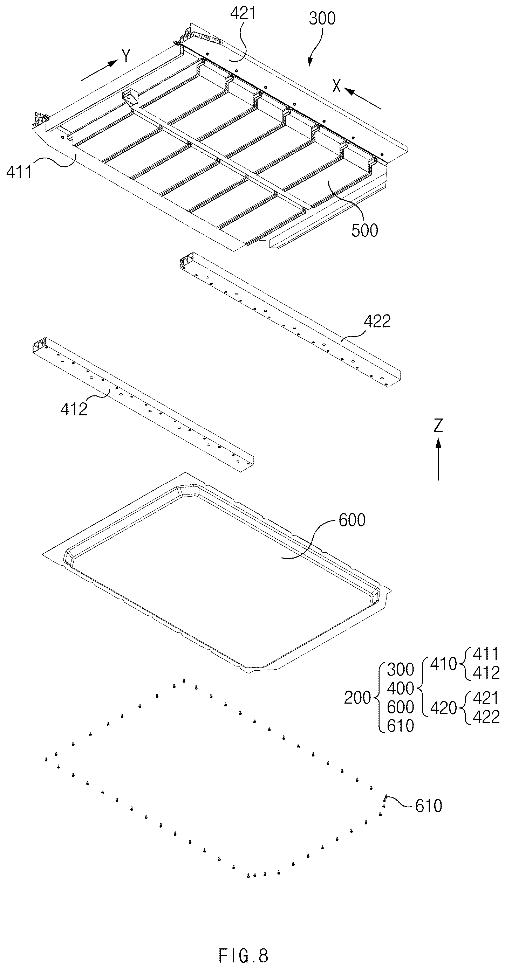

FIG. 3 illustrates a perspective view of a base cover, a first upper side member, a second upper side member, and a plurality of battery modules inserted into the base cover, according to an exemplary embodiment of the present disclosure. FIG. 4 illustrates a bottom perspective view of the vehicle body-battery assembly, according to an exemplary embodiment of the present disclosure. FIG. 5 illustrates an enlarged view of the vehicle body-battery assembly illustrated in FIG. 4. FIG. 6 illustrates a side view of a battery module and the base cover of the vehicle body-battery assembly, according to an exemplary embodiment. FIG. 7 illustrates an enlarged view of the battery module and the base cover illustrated in FIG. 6. FIG. 8 illustrates an exploded perspective view of a pack housing according to an exemplary embodiment.

Referring to FIGS. 3 through 8, the plurality of battery modules 500 may be configured to be inserted toward the base cover 300 from opposite sides of the base cover 300 in the widthwise direction.

As illustrated in FIG. 3, when the plurality of battery modules 500 are inserted toward the base cover 300, the base cover 300 may be in a state, in which the first upper side member 411 and the second upper side member 421 are coupled to each other.

Each of the plurality of battery modules 500 may be provided such that the widthwise direction of the base cover 300 becomes a lengthwise direction thereof, and the battery modules 500 may be inserted toward the base cover 300 in the widthwise direction of the base cover 300.

On the other hand, the battery modules 500 may be configured to be extracted in the widthwise direction of the base cover 300 from the battery cover 300 on a lower side of the base cover 300.

That is, when the battery modules 500 are mounted in the interior of the battery housing 200, they may be configured to be inserted toward the base cover 300 in the widthwise direction of the base cover 300 on the lower side of the base cover 300.

In contrast, when the battery modules 500 are replaced, they may be configured to be extracted from the base cover 300 in the widthwise direction of the base cover 300 on the lower side of the base cover 300. Accordingly, according to the structure of the vehicle body-battery assembly 100, according to an exemplary embodiment of the present disclosure, because the battery modules 500 may be easily replaced, the maintenance costs of the vehicle body-battery assembly 100 may be reduced.

The base cover 300 may comprise a base cover body 310 that defines the base cooling channel 310a in an interior thereof, a seat protrusion body 320 that is supported by the base cover body 310 and protrudes upward toward the occupant space 101, and a cross body 330 that is disposed on a lower side of the base cover body 310.

A separate seat cross member (not illustrated) may be inserted into the seat protrusion body 320 to reinforce the robustness of the vehicle body-battery assembly 100. The base cover body 310, the seat protrusion body 320, and the cross body 330 may be integrally formed.

The cross body 330 may comprise a cross partition body 340 that extends along a lengthwise direction of the base cover 300 and a cross support body 350 that extends perpendicular to an extension direction of the cross partition body 340 and extends along the widthwise direction of the base cover 300.

The cross partition body 340 may be configured to partition the plurality of battery modules 500 in the widthwise direction of the base cover 300 while contacting a lower surface of the base cover 300.

A plurality of cross support bodies 350 may be provided to be spaced apart from each other along the lengthwise direction of the base cover 300 to support the battery modules 500 therebetween. The cross support bodies 350 may be configured to support the battery modules 500 that are provided between the cross support bodies 350.

As illustrated in FIG. 5, the battery modules 500 may be inserted into or extracted from the base cover 300 in the widthwise direction. When the battery modules 500 are inserted in the widthwise direction of the base cover 300, the direction of insertion may be guided by the pair of cross support bodies 350, and the insertion positions of the battery modules 500 may be guided by the cross partition bodies 340.

Meanwhile, a plurality of seat protrusion bodies 320 may be formed to be spaced apart from each other along the lengthwise direction of the base cover 300. A plurality of cross support bodies 350 may be formed to be spaced apart from each other along the lengthwise direction of the base cover 300.

As illustrated in FIG. 6, the number of cross support bodies 350 may be greater than the number of seat protrusion bodies 320, and a cross support body 350 may be provided on a lower side of an area of the base cover body 310, in which each of the seat protrusion bodies 320 is formed.

According to this structure, when an external impact is applied from a lateral side of the vehicle body-battery assembly 100, the impact may be dispersed through both the cross support bodies 350 and the seat protrusion bodies 320, so that the robustness of the vehicle body-battery assembly 100 may be enhanced and the safety of the battery modules 500 may also be enhanced.

As illustrated in FIG. 7, the cross support body 350 may comprise a module stopping groove 351 having a shape that is opened toward one side that faces a battery module 500. The module stopping groove 351 may be formed in an area of the cross support body 350, which faces the base cover body 310.

The battery module 500 may comprise a plurality of battery cells (not illustrated), a module housing body 510 that is configured to accommodate the battery cells, and a module protrusion body 520 that protrudes from the module housing body 510 toward the module stopping groove 351 and is inserted into the module stopping groove 351.

The module protrusion body 520 may extend from an area of the module housing body 510, which contacts the base cover body 310, toward the module stopping groove 351 of each of the pair of cross support bodies 350, which faces the module housing body 510.

By the structure, in which the module protrusion body 520 is inserted into the module stopping groove 351, the battery module 500 may be moved only in the widthwise direction of the base cover 300. When the module protrusion body 520 is inserted into the module stopping groove 351, the module protrusion body 520 may be supported by the cross support body 350.

With this structure, a direction, in which the module protrusion body 520 is inserted into the module stopping groove 351, and a direction, in which the module protrusion body 520 is extracted from the module stopping groove 351, may be restricted, and each of the plurality of battery modules 500 may be inserted or extracted in the widthwise direction of the base cover 300.

The plurality of battery modules 500 may be spaced apart from each other along the lengthwise direction of the base cover 300 and may be provided between the cross support bodies 350.

As illustrated in FIG. 8, when the insertion of the plurality of battery modules 500 into the base cover 300 is completed, the first lower side member 412 and the second lower side member 422 may be coupled to the first upper side member 411 and the second upper side member 421, respectively, by the side coupling member 450 (see FIG. 2).

When each of the first upper side member 411 and the second upper side member 421 is coupled to the first lower side member 412 and the second lower side member 422, the first lower side member 412 and the second lower side member 422 may cover one surface of the battery module 500.

When the first upper side member 411 and the second upper side member 421 is coupled to the first lower side member 412 and the second lower side member 422, respectively, the housing cover 600 may be coupled to the first lower side member 412, the second lower side member 422, and the base cover 300 by the cover coupling member 610 on the lower side of the battery module 500.

When the housing cover 600 is coupled to the first lower side member 412, the second lower side member 422, and the base cover 300, the coupling of the vehicle body-battery assembly 100 may be completed.

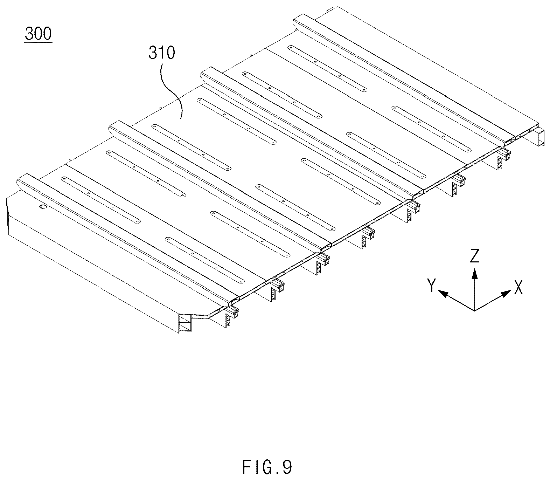

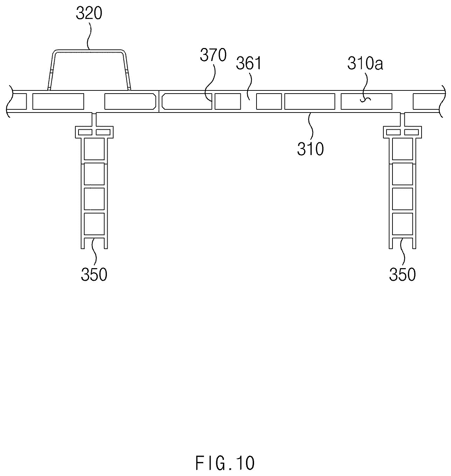

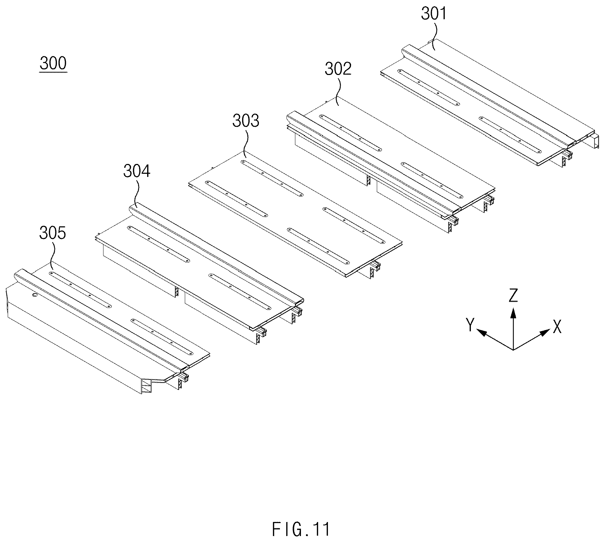

FIG. 9 illustrates a perspective view of the base cover, according to an exemplary embodiment of the present disclosure. FIG. 10 illustrates an enlarged side view of the base cover illustrated in FIG. 9. FIG. 11 illustrates an exploded perspective view of the base cover illustrated in FIG. 9.

Referring to FIGS. 9 through 11, the base cover 300 may comprise a base cover body 310 that defines the base cooling channel 310a in an interior thereof.

Cooling water may flow in the base cooling channel 310a. The cooling water may absorb heat from battery cells of the battery module 500 while flowing through the base cooling channel 310a.

The base cooling channel 310a may comprise a part that extends along the widthwise direction of the base cover 300, and may be arranged in a serpentine shape along the lengthwise direction of the base cover 300. The base cooling channel 310a may be partitioned along the lengthwise direction of the base cover 300.

The base cover 300 may be formed of an extrudable material. Accordingly, the base cooling channel 310a formed in the interior of the base cover body 310 may comprise a portion that extends linearly along the lengthwise direction or the widthwise direction of the base cover 300.

The base cover body 310 may comprise a channel partition wall 370 that partitions the base cooling channel 310a in the lengthwise direction of the base cover 300. Furthermore, the base cover body 310 may comprise a heat transfer injection wall 361 that partitions the base cooling channel 310a with respect to the lengthwise direction of the base cover 300.

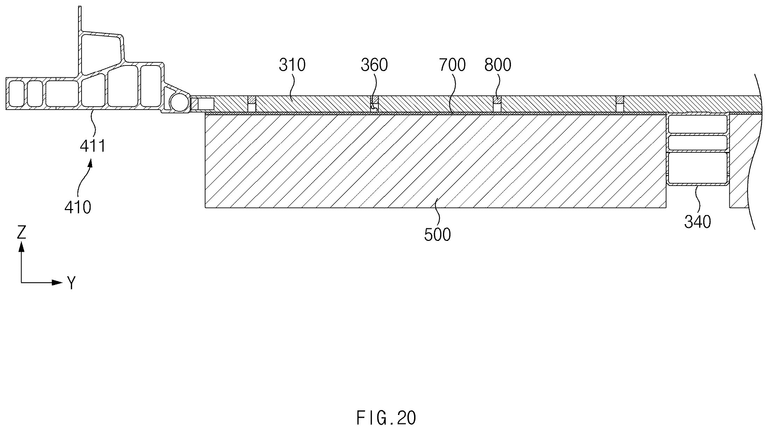

As will be described later, the heat transfer injection wall 361 may be a part, into which a heat transfer material 700 (see FIG. 20) is to be injected.

A thickness of the channel partition wall 370 may be smaller than a thickness of the heat transfer injection wall 361. Here, the thickness of the channel partition wall 370 and the thickness of the heat transfer injection wall 361 may refer to the thicknesses in the lengthwise direction of the base cover 300.

The reason why the heat transfer injection wall 361 has a greater thickness than the channel partition wall 370 may be that a heat transfer injection hole 360 (see FIG. 20) needs to be formed in the heat transfer injection wall 361.

Meanwhile, as illustrated in FIG. 11, the base cover 300 may comprise a plurality of sub-base covers 301, 302, 303, 304, and 305 that are separably coupled to each other.

That is, the sub-base covers 301, 302, 303, 304, and 305 may comprise a first sub-base cover 301, a second sub-base cover 302 that contacts the first sub-base cover 301, a third sub-base cover 303 that contacts the second sub-base cover 302, a fourth sub-base cover 304 that contacts the third sub-base cover 303, and a fifth sub-base cover 305 that contacts the fourth sub-base cover 304.

The first to fifth sub-base covers 301, 302, 303, 304, and 305 may be welded to each other to form a single base cover 300.

The first and second side members 410 and 420 (see FIG. 2) may be coupled to opposite sides of the base cover 300 in the widthwise direction, and the first to fifth sub-base covers 301, 302, 303, 304, and 305 may be welded together to form the base cover 300.

In particular, the first upper side member 411 and the second upper side member 421 may be inserted into and fitted with the first to fifth sub-base covers 301, 302, 303, 304, and 305, and may be coupled to the sub-base covers 301 to 305, respectively, by separate welding or adhesive.

With this structure, when an external impact is absorbed by the first upper side member 411 and the second upper side member 421, the impact may be dispersed to the first to fifth sub-base covers 301 to 305 through the first upper side member 411 or the second upper side member 421, so that the robust of the vehicle body-battery assembly 100 may be improved.

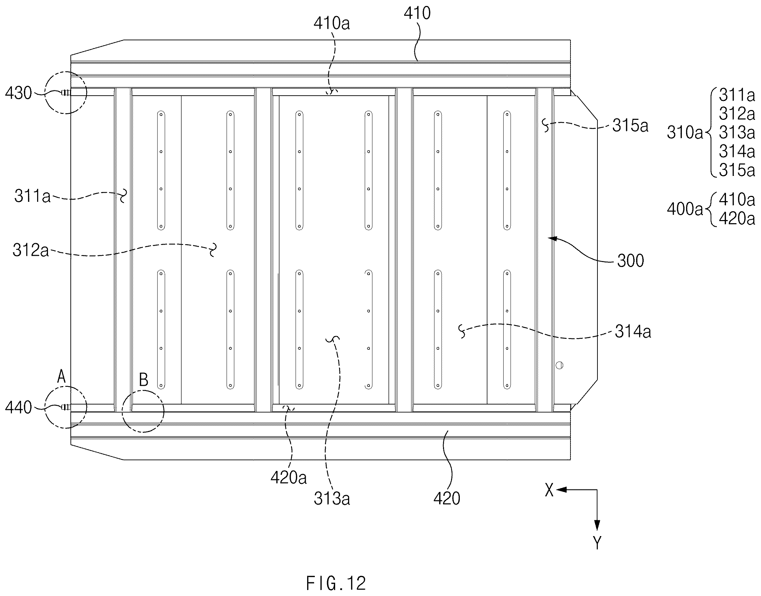

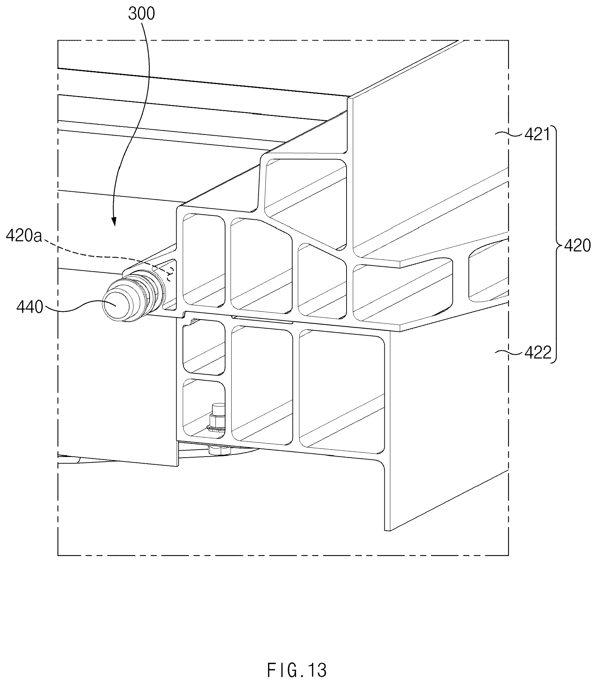

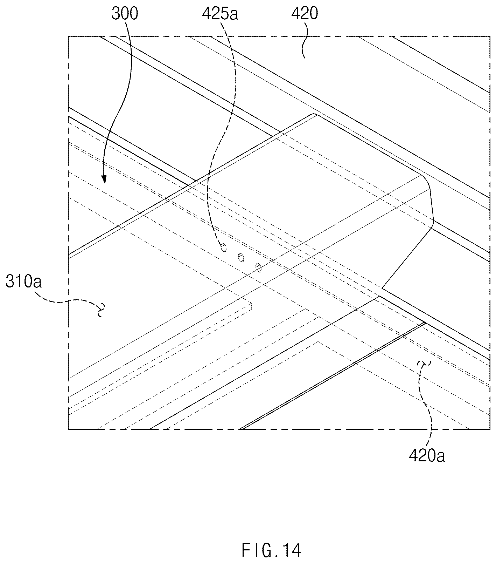

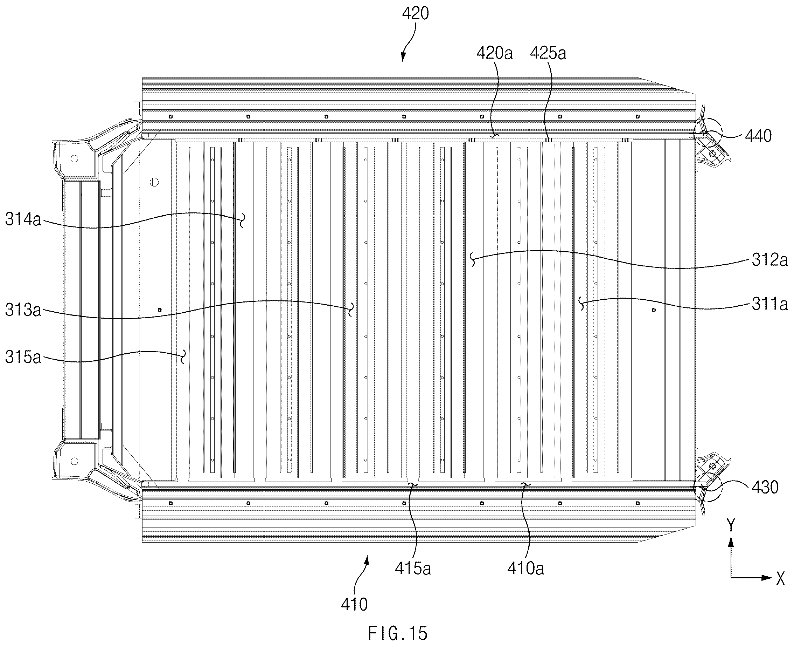

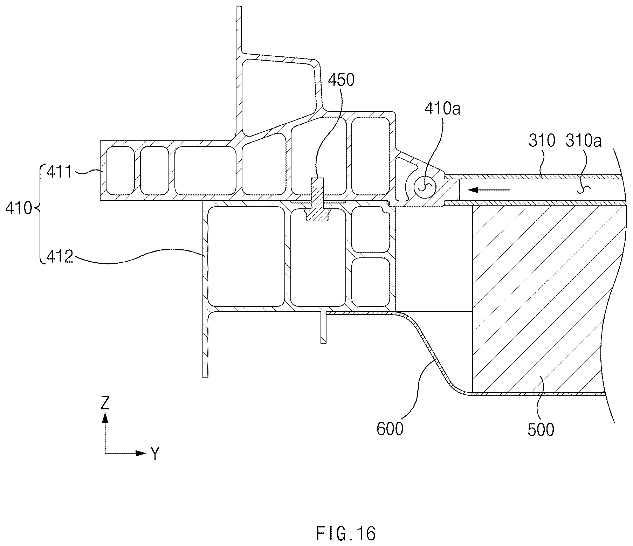

FIG. 12 illustrates a plan view of the base cover and a side member, according to an exemplary embodiment of the present disclosure. FIG. 13 illustrates an enlarged perspective view of portion A illustrated in FIG. 12. FIG. 14 illustrates an enlarged perspective view of portion B illustrated in FIG. 12. FIG. 15 illustrates a horizontal cross-sectional view of the base cover and the side member, according to an exemplary embodiment of the present disclosure. FIG. 16 illustrates a longitudinal cross-sectional view of a first side member, the base cover, the battery module, and the housing cover, according to an exemplary embodiment of the present disclosure.

Referring to FIGS. 12 through 16, the side members 400 may be coupled to opposite sides of the base cover 300 in the widthwise direction and may define a side cooling channel 400a that communicates with the base cooling channel 310a in an interior thereof. The side members 400 may be inserted into the base cover 300 in the widthwise direction of the base cover 300.

The side cooling channels 400a may comprise a first side cooling channel 410a that is formed in an interior of the first side member 410 and is provided on one side of the base cooling channel 310a, and a second side cooling channel 420a that is formed in an interior of the second side member 420 and is provided on an opposite side of the base cooling channel 310a.

More specifically, the base cooling channel 310a may comprise a first base cooling channel 311a, a second base cooling channel 312a, a third base cooling channel 313a, a fourth base cooling channel 314a, and a fifth base cooling channel 315a.

The first base cooling channel 311a may be formed in an interior of the first sub-base cover 301 (see FIG. 11), and the second base cooling channel 312a may be formed in an interior of the second sub-base cover 302.

The third base cooling channel 313a may be formed in an interior of the third sub-base cover 303, and the fourth base cooling channel 314a may be formed in an interior of the fourth sub-base cover 304. The fifth base cooling channel 315a may be formed in an interior of the fifth sub-base cover 305.

Each of the first to fifth base cooling channels 311a to 315a may be configured to communicate with the first side cooling channel 410a and the second side cooling channel 420a.

The first side member 410 may be inserted into each of the first to fifth sub-base covers 301, 302, 303, 304, and 305 from one side of each of the first to fifth sub-base covers 301, 302, 303, 304, and 305.

That is, the first side member 410 may be coupled to the right side of the base cover 300. The first side member 410 may be connected to the right side of the base cover 300.

As the first side member 410 is inserted into each of the first to fifth sub-base covers 301, 302, 303, 304, and 305, the first side cooling channel 410a may communicate with the first to fifth base cooling channels 311a, 312a, 313a, 314a, and 315a.

The second side member 420 may be inserted into each of the first to fifth sub-base covers 301, 302, 303, 304, and 305 from an opposite side of each of the first to fifth sub-base covers 301, 302, 303, 304, and 305.

That is, the second side member 420 may be coupled to the left side of the base cover 300. The second side member 420 may be connected to the left side of the base cover 300.

As the second side member 420 is inserted into each of the first to fifth sub-base covers 301, 302, 303, 304, and 305, the second side cooling channel 420a may be configured to communicate with the first to fifth base cooling channels 311a, 312a, 313a, 314a, and 315a.

The first side cooling channel 410a and the second side cooling channel 420a may both extend in the lengthwise direction of the base cover 300 from opposite sides of the base cover 300 with respect to the widthwise direction.

The vehicle body-battery assembly 100 (see FIG. 1) may further comprise a recovery part 430 that is connected to the first side member 410 and configured to communicate with the first side cooling channel 410a to recover the cooling water that flows through the first side cooling channel 410a, and a supply part 440 that is connected to the second side member 420 and configured to communicate with the second side cooling channel 420a to supply the cooling water into the second side cooling channel 420a.

The recovery part 430 may be disposed in an area of the first side member 410, which faces a front side. The supply part 440 may also be disposed in an area of the second side member 420, which faces a front side.

The supply part 440 may be connected to the second side member 420 to supply the cooling water from outside the vehicle body-battery assembly 100 to the second side cooling channel 420a. The supply part 440 may communicate with the second side cooling channel 420a.

The recovery part 430 may be connected to the first side member 410 to recover cooling water that flows through the first side cooling channel 410a to the outside of the vehicle body-battery assembly 100. The recovery part 430 may be configured to communicate with the first side cooling channel 410a.

The recovery part 430 may be connected to the first side member 410. The recovery part 430 may be formed to recover the cooling water that is supplied through the supply part 440 and is introduced into the first side cooling channel 410a while flowing through the second side cooling channel 420a and the base cooling channel 310a.

As illustrated in FIG. 13, the supply part 440 may be configured to introduce the cooling water from the outside of the vehicle body-battery assembly 100 into the second side cooling channel 420a.

As illustrated in FIG. 14, the cooling water introduced into the second side cooling channel 420a may be distributed into the base cooling channel 310a through a supply communication hole 425a.

As illustrated in FIG. 15, the cooling water introduced into the base cooling channel 310a may be collected in the first side cooling channel 410a through a recovery communication hole 415a. The cooling water collected in the first side cooling channel 410a may be recovered to the outside of the vehicle body-battery assembly 100 through the recovery part 430.

The supply communication hole 425a may be formed on a surface of the second side member 420, which faces the base cover 300. The supply communication hole 425a may communicate the second side cooling channel 420a and the base cooling channel 310a.

The recovery communication hole 415a may be formed on a surface of the first side member 410, which faces the base cover 300. The recovery communication hole 415a may communicate the base cooling channel 310a and the first side cooling channel 410a. A cross-sectional area of the supply communication hole 425a may be smaller than a cross-sectional area of the recovery communication hole 415a.

With this structure, the cooling water may flow smoothly through the second side cooling channel 420a, the supply communication hole 425a, the base cooling channel 310a, the recovery communication hole 415a, and the first side cooling channel 410a.

As illustrated in FIG. 16, the first side members 410 may comprise the first upper side member 411 and the first lower side member 412, on which the first upper side member 411 is seated.

The first upper side member 411 may comprise the first side cooling channel 410a in an interior thereof, and may be inserted into the base cover 300. The first upper side member 411 may be seated on the first lower side member 412, which covers the battery module 500. The first upper side member 411 and the first lower side member 412 may be coupled to each other by a side coupling member 450.

The second side member 420 may also comprise the second upper side member 421 and the second lower side member 422, on which the second upper side member 421 is seated.

The second upper side member 421 may comprise the second side cooling channel 420a in an interior thereof, and may be inserted into the base cover 300. The second upper side member 421 may be seated on the second lower side member 422, which covers the battery module 500. The second upper side member 421 and the second lower side member 422 may also be coupled to each other by the side coupling member 450.

Meanwhile, each of the first to fifth sub-base covers 301, 302, 303, 304, and 305 (see FIG. 12) may comprise an upper base wall and a lower base wall that define the first to fifth base cooling channels 311a, 312a, 313a, 314a, and 315a in an interior thereof.

That is, as illustrated in FIG. 16, the base cooling channel 310a may be formed between the upper base wall and the lower base wall. For example, a thickness of the upper base wall in an upward/downward direction and a thickness of the lower base wall in an upward/downward direction may be the same, but may be different.

As an example, the thickness of the upper base wall may be greater than that of the lower base wall. With this structure, although the cooling water that flows through the base cooling channel 310a effectively absorbs heat from the battery module 500, but the transfer of heat to the occupant space 101 (see FIG. 1) may be prevented, so that the heat transfer performance of the battery module 500 may be maximized.

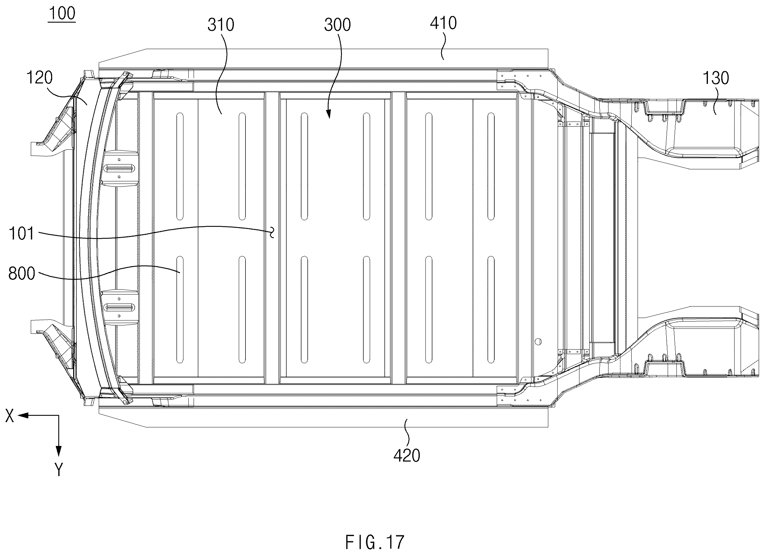

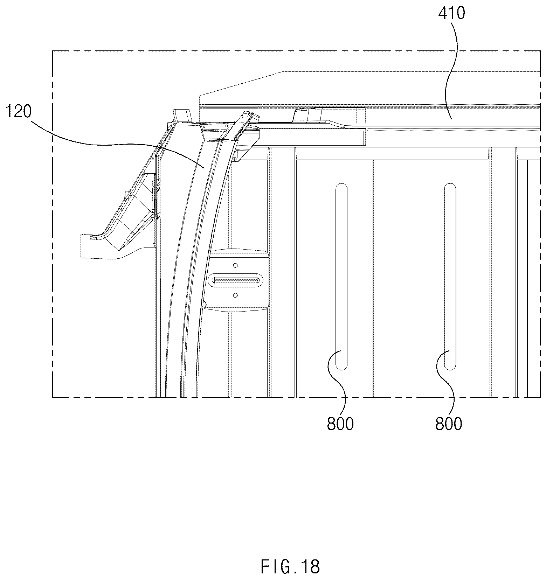

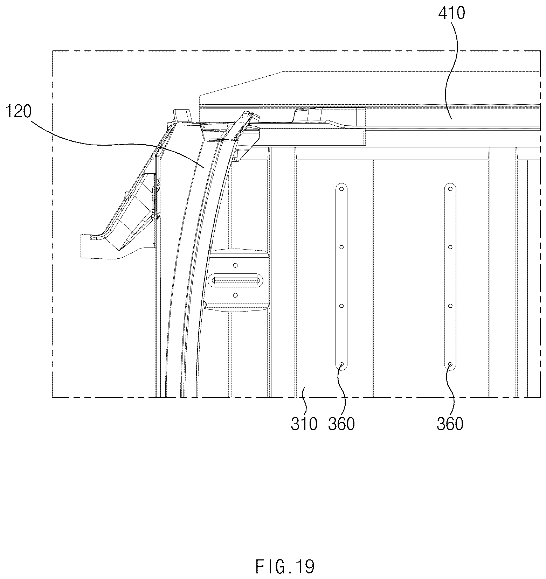

FIG. 17 illustrates a plan view of the vehicle body-battery assembly, according to an exemplary embodiment of the present disclosure. FIG. 18 illustrates an enlarged view of the vehicle body-battery assembly illustrated in FIG. 17. FIG. 19 illustrates an enlarged view of the vehicle body-battery assembly illustrated in FIG. 17 with an injection hole cover member removed. FIG. 20 illustrates an enlarged view of a longitudinal cross section of the vehicle body-battery assembly illustrated in FIG. 17.

Referring to FIGS. 17 and 18, the vehicle body-battery assembly 100 may further comprise an injection hole cover member 800 that is disposed on one side of the base cover 300, which faces the occupant space 101.

Referring to FIG. 19, when the injection hole cover member 800 is separated from the base cover 300, a heat transfer injection hole 360 of the base cover 300 may be exposed.

Referring to FIG. 20, the heat transfer injection hole 360 may be configured to communicate one side of the base cover 300 facing the occupant space 101 and a space between the base cover 300 and the battery module 500. The heat transfer injection hole 360 may pass through the base cover body 310.

In other words, the base cover 300 may comprise the heat transfer injection hole 360 that passes through the base cover 300 to communicate an upper side of the base cover 300 and a space between the base cover 300 and the battery module 500.

The heat transfer injection hole 360 may be formed in an area of the base cover body 310, which faces the battery module 500. The heat transfer injection hole 360 may be formed in an area of the base cover body 310, which faces a central area of the battery module 500. A plurality of heat transfer injection holes 360 may be formed to be spaced apart from each other along the lengthwise direction of the battery module 500 or along the widthwise direction of the base cover 300.

The position and number of the heat transfer injection holes 360 are not limited thereto, and may be determined to be optimized for applying a heat transfer material between the battery module 500 and the base cover 300. As an example, the heat transfer injection holes 360 may be formed at heights that are parallel to the area between the battery module 500 and the base cover 300.

The heat transfer injection holes 360 may not be provided in areas that overlap the base cooling channel 310a (see FIG. 10). Accordingly, the heat transfer injection wall 361, in which the heat transfer injection holes 360 are formed, may partition the base cooling channel 310a along the lengthwise direction of the base cover 300.

A heat transfer material 700 may be injected into the heat transfer injection hole 360. When the battery module 500 is inserted into the base cover 300, the heat transfer material 700 may be injected into the interior of the base cover body 310 through the heat transfer injection hole 360.

The heat transfer material 700 injected into the interior of the base cover body 310 through the heat transfer injection hole 360 may flow between the base cover 300 and the battery module 500 by gravity. The heat transfer material 700 may be accommodated between the base cover 300 and the battery module 500 and may adhere the battery module 500 to the base cover 300.

When the heat transfer material 700 is injected through any one of the plurality of heat transfer injection holes 360, it may be identified whether the injected heat transfer material 700 has been properly applied to the area between the base cover 300 and the battery module 500 through the other heat transfer injection holes 360.

The heat transfer material 700 may be formed of a material having a high thermal conductivity. Furthermore, the heat transfer material 700 may be formed of a material having a strong adhesiveness. The heat transfer material 700 may be provided between the base cover 300 and the battery module 500 and may adhere the battery module 500 to the base cover 300.

With this structure, the battery module 500 may comprise surface-attached to the heat transfer material 700 and the cross partition body 340, and thus, the vehicle body-battery assembly 100 may have a stable structure.

Furthermore, heat of the battery module 500 may be transferred to the cooling water that flows through the interior of the base cover 300, through the heat transfer material 700. Accordingly, the temperature of the battery module 500 may be adjusted to an appropriate level.

After the heat transfer material 700 is injected through the heat transfer injection hole 360, the injection hole cover member 800 may be located at a position, at which it covers the heat transfer injection hole 360.

That is, as illustrated in FIG. 18, the injection hole cover member 800 may be disposed on an upper side of the base cover 300 and may cover the heat transfer injection hole 360. The injection hole cover member 800 may extend in the widthwise direction of the base cover 300 and may cover the plurality of heat transfer injection holes 360. The number of the injection hole cover members 800 may correspond to the number of the battery modules 500.

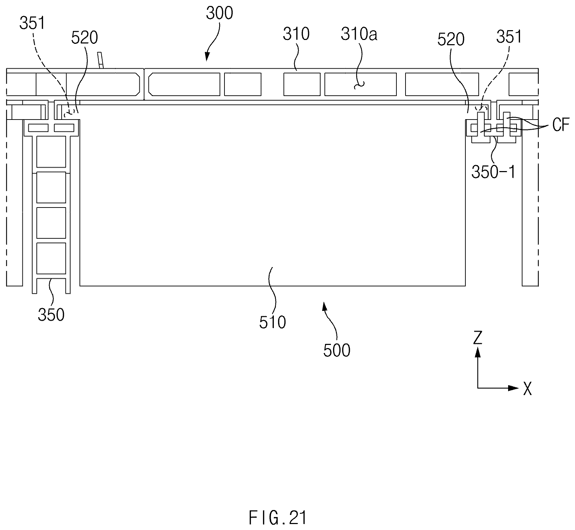

FIG. 21 illustrates an enlarged side view of a battery module and a base cover of a vehicle body-battery assembly, according to an exemplary embodiment of the present disclosure.

Referring to FIG. 21, unlike the structure of the cross support body 350 illustrated in FIG. 7, a cross support body 350-1 may be used.

The cross support body 350-1 may have a smaller height than that of the cross support body 350. The cross support body 350-1 may comprise a module stopping groove 351 having a shape that is opened toward one side that faces a battery module 500.

The cross support body 350-1 may be coupled to the module protrusion body 520 of the battery module 500 through a cross body coupling member CF.

In other words, when the cross support body 350 is used, it may be sufficient as long as the module protrusion body 520 of the battery module 500 may be inserted into the module stopping groove 351 of the cross support body 350 to be supported by the cross support body 350.

In contrast, when the cross support body 350-1 is used, the module protrusion body 520 of the battery module 500 needs to be inserted into the module stopping groove 351 of the cross support body 350-1 and be coupled to the cross support body 350-1 through the cross body coupling member CF.

Because the cross support body 350-1 may have a reduced weight compared to the cross support body 350, the cross support body 350 or the cross support body 350-1 may be appropriately selected depending on the weight specification.

Because each of the plurality of battery modules of the present technology may be detachably supported by the base cover, only the abnormal battery module, among the plurality of battery modules, may be replaced, and thus, the replacement costs may be reduced.

Furthermore, because the base cover, in which a base cooling channel is provided in an interior thereof, serves as a floor of an occupant space, the robustness of the vehicle body-battery assembly may be enhanced compared to a structure, in which the battery cover serves as the floor of the occupant space.

Furthermore, because each of the plurality of battery modules is inserted into the module stopping groove of the base cover, the plurality of battery modules may be supported by the base cover, and at the same time, the plurality of battery modules may be inserted into or extracted from the base cover in the widthwise direction.

Furthermore, because the side members are coupled to opposite sides of the base cover, external impacts that may be delivered from a lateral side of the vehicle body-battery assembly may be dispersed to the base cover, so that the robustness of the vehicle body-battery assembly may be enhanced.

Besides, a variety of effects directly or indirectly understood through the present disclosure may be provided.

Hereinabove, the above description is merely illustrative of the technical idea disclosed in the specification, and various modifications and variations may be made by one skilled in the art, to which the embodiments disclosed in the specification belong, without departing from the essential characteristic of the embodiments disclosed in the specification.

Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

### [Description of Reference Numerals]

100 : vehicle body-battery assembly
101 : occupant space
110 : chassis frame
120 : front chassis frame
130 : rear chassis frame
200 : battery housing
300 : base cover
301 : first sub-base cover
302 : second sub-base cover
303 : third sub-base cover
304 : fourth sub-base cover
305 : fifth sub-base cover
310 : base cover body
310a : base cooling channel
311a : first base cooling channel
312a : second base cooling channel
313a : third base cooling channel
314a : fourth base cooling channel
315a : fifth base cooling channel
320 : seat protrusion body
330 : cross body
340 : cross partition body
350, 350-1 : cross support body
351 : module stopping groove
360 : heat transfer injection hole
361 : heat transfer injection wall
370 : channel partition wall
400 : side member
400a : side cooling channel
410 : first side member
410a : first side cooling channel
411 : first upper side member
412 : first lower side member
415a : recovery communication hole
420 : second side member
420a : second side cooling channel
421 : second upper side member
422 : second lower side member
425 : supply communication hole
430 : recovery part
440 : supply part
450 : side coupling member
500 : battery module
510 : module housing body
520 : module protrusion body
600 : housing cover
610 : cover coupling member
700 : heat transfer material
800 : injection hole cover member
CF : cross body coupling member

## Claims

1. A vehicle body-battery assembly comprising:
a chassis frame;
a battery housing comprising a base cover coupled to the chassis frame; and
a battery module detachably supported by the base cover.

2. The vehicle body-battery assembly of claim 1, wherein the base cover is positioned to cover a side of an occupant space.

3. The vehicle body-battery assembly of claim 2, wherein the battery module is detachably supported by the base cover on a first side opposite to a second side, on which the occupant space is provided, with respect to the base cover.

4. The vehicle body-battery assembly of claim 3, wherein the battery module is configured to be extractable from the base cover in a widthwise direction of the base cover on the first side of the base cover.

5. The vehicle body-battery assembly of claim 4, wherein the battery module is configured such that:
the widthwise direction of the base cover is a lengthwise direction of the battery module, and
it is configured to be inserted toward the base cover in the widthwise direction of the base cover.

6. The vehicle body-battery assembly of anyone of claims 1-5, wherein the base cover defines a base cooling channel in an interior of the base cover.

7. The vehicle body-battery assembly of claim 6, wherein the base cover comprises:
a base cover body defining the base cooling channel;
a seat protrusion body:
supported by the base cover body; and
protruding from a side of the base cover body toward the occupant space; and
a cross support body disposed on the opposite side of the base cover body.

8. The vehicle body-battery assembly of claim 7, wherein the cross support body comprises a plurality of cross support bodies spaced apart from each other along a lengthwise direction of the base cover to support the battery module between the plurality of cross support bodies,
wherein each of the plurality of cross support bodies is configured to support the battery module provided between the plurality of cross support bodies.

9. The vehicle body-battery assembly of claim 7 or 8, wherein:
the cross support body comprises a module stopping groove having a shape opened toward a first side of the cross support body, which faces the battery module, and
the battery modules comprises:
a plurality of battery cells;
a module housing body configured to accommodate the plurality of battery cells; and
a module protrusion body protruding from the module housing body toward the module stopping groove and configured to be inserted into the module stopping groove.

10. The vehicle body-battery assembly of claim 6, or of anyone of claims 7-9 provided that in combination with claim 6, wherein the base cooling channel includes:
a part extending along a widthwise direction of the base cover.

11. The vehicle body-battery assembly of claim 6, or of anyone of claims 7-10 provided that in combination with claim 6, wherein:
the base cooling channel is arranged in a serpentine shape along a lengthwise direction of the base cover, and
the battery housing further comprises a side member coupled to a side of the base cover and in which a side cooling channel communicating with the base cooling channel is formed in an interior of the side member.

12. The vehicle body-battery assembly of claim 11, wherein:
the side member is configured to be inserted into the base cover in the widthwise direction of the base cover, and
the side member comprises:
an upper side member inserted into the base cover and comprising the side cooling channel; and
a lower side member on which the upper side member is seated, and configured to cover the battery module.

13. The vehicle body-battery assembly of claim 11 or 12, wherein:
the side cooling channel comprises a first side cooling channel provided on a first side of the base cooling channel and a second side cooling channel provided on a second side of the base cooling channel, and
the side member comprises:
a first side member connected to a first side of the base cover in the width direction of the base cover, and defining a recovery communication hole configured to communicate the first side cooling channel and the base cooling channel; and
a second side member connected to a second side of the base cover in the width direction of the base cover, and defining a supply communication hole configured to communicate the second side cooling channel and the base cooling channel, and
further comprising:
a supply part configured to communicate with the second side cooling channel, and configured to supply cooling water to the second side cooling channel; and
a recovery part configured to communicate with the first side cooling channel to recover the cooling water supplied through the supply part, flowing through the second side cooling channel and the base cooling channel, and introduced into the first side cooling channel.

14. The vehicle body-battery assembly of anyone of claims 1-13, further comprising a heat transfer material provided between the base cover and the battery module.

15. The vehicle body-battery assembly of claim 13, or of claim 14 in combination with claim 13, wherein the base cover comprises a base cover body comprising a heat transfer injection hole configured to pass through the base cover to communicate the second side of the base cover and a space between the base cover and the battery module.
